# EUROPEAN PATENT SPECIFICATION

(11) **EP 0 325 466 B1**
(45) Date of publication and mention of the grant of the patent: **19.03.1997**
(21) Application number: 89300524.9
(22) Date of filing: 19.01.1989
(51) Int. Cl.: C09K 7/02, E21B 31/03

(54) **The use of polyalphaolefin in downhole drilling**
Verwendung von Polyalphaolefinen beim Bohren von Bohrlöchern
Utilisation de polyalphaoléfine dans le forage des puits

(30) Priority: 19.01.1988 US 145149; 22.11.1988 US 275201
(43) Date of publication of application: 26.07.1989
(73) Proprietor: Coastal Mud, Inc., Abbeville Louisiana 70511-1166 (US)
(72) Inventor: Trahan, David Owen, Abbeville Luisiana 70510 (US); Faulk, Michael Brent, Kaplan Louisiana 70548 (US)
(74) Representative: Silverman, Warren

(56) References cited:
- EP-A- 0 124 194
- FR-A- 2 507 616
- GB-A- 2 131 067
- GB-A- 2 166 782
- US-A- 4 572 790

## Description

The present invention relates to downhole lubricants and spotting fluids. More particularly, the present invention relates to the use of a downhole drilling compound used as an additive in water-based drilling fluids to lubricate the drill pipe during the drilling process and to free the drill pipe that has become stuck during the drilling process. The present invention further relates to the use of a synthetic hydrocarbon fluid, in particular polyalphaolefin (PAO) liquid containing no more than 0.5 % 1 - decene monomer, blended in a concentration range of at least 5% by volume with emulsifiers; sometimes referred to as the PAO/emulsifier blend. When introduced at a certain volume downhole, the compound performs as a lubricating agent, used particularly for preventing the drag and torque on drill pipe, and as a spotting fluid, for dislodging stuck drill pipe from the well bore. One distinct advantage of the invention over the previous art in this field, is that the PAO/emulsifier blend is non-toxic to marine life and does not produce a visible sheen when discharged into water bodies.

In the case of differential sticking, the hydrostatic fluid pressure of the drilling mud is greater than the permeable pressure of the exposed formation causing the flow of drilling mud into that area of the formation thus lodging the drill pipe against the formation face. When this occurs, the contact area of the drill pipe and the formation is great enough to cause an increase in rotational torque such that it prevents further movement of the drill pipe without a risk of parting the drill pipe string.

Previous publications concerning methods of preventing drill pipe from sticking and/or freeing stuck drill pipe have discussed the common method of using an oil mud or oil or water based surfactant composition, to reduce friction, permeate drilling mud wall cake, destroy binding wall cake and reduce differential pressure.

There thus remains a serious need for chemical compositions which can better reduce frictional torque and release stuck drill pipe while demonstrating a low order of toxicity to marine life, more specifically a product to comply with NPDES permit GOM LC₅₀ test and not produce a surface sheen on the water body.

Therefore, it is a principal object of the present invention to provide a liquid hydrocarbon for use as a lubricant to be administered in downhole drilling operations for reducing the drag or torque on the drill string during drilling;

It is a further object of the present invention to provide the application of a liquid hydrocarbon as a spotting fluid in order to unstick pipe that has been stuck downhole;

It is a further object of the present invention to provide the application of a liquid hydrocarbon - emulsifier blend as a downhole lubricant which is non-toxic to marine life and does not produce a sheen on the water surface when dumped on the water body;

It is still a further object of the present invention to provide a non-toxic base fluid that complies with NPDES - GOM - LC₅₀ test, comprising a liquid hydrocarbon having a low monomer content as exemplified by less than .5% concentration of 1 - decene monomer in an oligomer derived from 1 - decene.

In contrast to prior art developments which incorporated the use of refined crude oil, diesel, kerosene, mineral oil and most recently low polynuclear aromatic mineral oils (as described in International Pat No. WO 83/02949 and FR-A-2 507 616), it has been discovered that certain hydrocarbon oils which are isoparaffinic oils with no aromatic content, specifically a class of hydrocarbon oils to be defined herein, demonstrate the required fluid properties and provide the necessary low order of toxicity to comply with the NPDES - GOM - LC₅₀ test to function as the primary composition of downhole fluid additives, more specifically a lubricant and spotting fluid.

According to one aspect of the present invention, there is provided a drilling fluid comprising:
i) a water base mud system to which there has been added and mixed therewith
ii) a drilling fluid concentrate in a liquid volume concentration of 0.25 to 6.0% of the water base mud system, which concentrate comprises:

a) a liquid hydrocarbon of acceptably low toxicity to marine life according to the NPDES-GOM-LC₅₀ test and which is a totally hydrogenated oligomer of an alphaolefin, at a concentration of at least 5% of the drilling fluid concentrate; and
b) an emulsifier additive added to the liquid hydrocarbon, to be present in the concentrate in a range of 30% to 5% concentration.

Previous developments in this area deal with the application in oil based mud. This invention specifically pertains to the application of these polyalphaolefin compounds as an additive in water based drilling fluids. In contrast to the previous use of synthetic oils in lubricating engines, mills, etc., this invention does not deal with metal to metal, thin film type of lubrication. It is specifically directed to the use of a liquid hydrocarbon blended with emulsifiers as a concentrate to be present in an amount of at least .25% by volume of water base mud system used to lubricate the drill pipe while rotating or pulling past a mud filter cake, hard or soft rock, or casing in a well bore, and to unstick drill pipe that has become differentially stuck.

The drilling fluid of the present invention includes a liquid hydrocarbon as specified herein blended in various concentrations with chemical oil and water emulsifiers, thinners and oil and water surface tension reducers, the concentration of liquid hydrocarbon to that of the remaining portion of the blend being no less than 5%; the liquid hydrocarbon and the emulsifiers are blended in a blending tank containing water base drilling mud in an amount of from .25% to 6.0% by volume. In use, the blend of liquid hydrocarbon and emulsifier is circulated with the water base drilling mud down the drilling hole, so that the blend of liquid hydrocarbon emulsifier and water base drilling mud lubricates the drill string or reduces the rotational torque or drag between the wall of the borehole and the drill string so that the drill string is free to rotate and drilling may be undertaken with less drag or torque.

In a second aspect, this invention provides a drilling method in downhole drilling, utilizing a water-base mud system, wherein a pipe is stuck over an interval thereof and a predetermined volume of a drilling fluid concentrate is introduced downhole as a spotting fluid at the depth at which sticking of a pipe has occurred to displace the water-based mud over the entire stuck interval to unstick the pipe, which drilling fluid concentrate comprises (a) a liquid hydrocarbon of acceptably low toxicity to marine life according to the NPDES-GOM-LC₅₀ test and which is a totally hydrogenated oligomer of an alphaolefin, at a concentrate of at least 5% of the drilling fluid concentrate and (b) an emulsifier additive added to the liquid hydrocarbon, to be present in the concentrate in a range of 30% to 5% of the concentrate, and continuing drilling with the concentrate admixed with the water-based mud system. In this aspect of the invention, the liquid hydrocarbon blended with the emulsifier serves as a spotting fluid in order to unstick drill pipe that has been stuck. For this purpose, the liquid hydrocarbon-emulsifier blend is introduced into the borehole as a "pill of spotting fluid; the pill is circulated downhole in the mud system through the annulus to the depth at which the pipe is stuck; the liquid hydrocarbon-emulsifier blend acts on the wall filter cake reducing the differential pressure bond. As with the drilling fluid of the first embodiment of the invention, the spotting fluid can incorporate an emulsifier, thinner and surface tension reducing additive which is a blend of modified fatty acid and amides. Insofar as the drilling of the fluid of the first embodiment of the invention is concerned, the additive can also be a blend of sulfurized fatty acids and modified fatty acids. For purposes of this invention, the liquid hydrocarbon is a totally hydrogenated alpha-olefin oligomer produced from an alpha-olefin such as 1-decene. More particularly, the liquid hydrocarbon is a fully hydrogenated alpha-olefin oligomer comprised for example of dimer, trimer, tetramer and pentamer and having a viscosity of approximately 2 centistokes at 210 degrees Fahrenheit (99°C).

According to a preferred feature of the invention there is utilized a drilling fluid concentrate containing no more than .5% 1-decene monomer in the alpha-olefin oligomer.

According to a further preferred feature of the invention, the drilling fluid concentrate contains 90% liquid hydrocarbon. The concentrate also preferably contains 10% emulsifier additive.

The preferred embodiment of the combination of matter and the method of the present invention utilizes as a liquid hydrocarbon an oligomer of 1-decene which is fully hydrogenated, the oligomer preferably containing no more than 0.5% 1-decene monomer. This liquid hydrocarbon is employed in a concentration range of at least 5% by volume with other liquid additives blended in various concentration; additives such as chemical oil and water emulsifiers, thinners, and oil and water surface tension reducers may be present. With a concentration of liquid hydrocarbon in the remaining portion of the blend of not less than 5%, the concentrate can function as a water base drilling mud lubricant or a water base drilling mud spotting fluid. When utilized as a water base drilling lubricant, the blend of liquid hydrocarbon and additives, presently sold under the registered trademark "COASTALUBE", would have an optimum liquid hydrocarbon concentration of 70% to 95% and an optimum additive concentration of 30% to 5%. When utilized as a water base spotting fluid, the blend is sold under the registered trademark COASTAL SPOT; likewise, the liquid hydrocarbon comprising an optimum additive concentration comprising 30% to 5% of the blend.

For the purposes of this invention, both when the liquid hydrocarbon additive blend is either serving as a drilling fluid lubricant, or when it is a spotting fluid, the emulsifier, thinner, surface tension reducing additives cap be described as a blend of modified fatty acid and amides. The liquid hydrocarbon is commercially prepared in a number of different methods, but for purposes of this invention the totally hydrogenated alpha-olefin oligomer is produced from an alpha-olefin such as 1-decene. Preferably, the liquid hydrocarbon is a totally hydrogenated alpha-olefin oligomer comprised of dimer, trimer. tetramer, and pentamer having a viscosity of approximately 2 centistokes at 210 degrees Fahrenheit (99°C). In order to qualify as a non-toxic base fluid and comply with NPDES GOM LC₅₀ test, the liquid hydrocarbon, when an oligomer of 1-decene, must consist of low value (less than .5% concentration) of 1-decene monomer. The various oligomer distributions were determined by gas chromatography. The important feature of the liquid hydrocarbon application downhole and more particularly offshore, is the fact that it is non-toxic to marine life and does not produce a sheen into the sea water.

Turning now to the manner in which the liquid hydrocarbon blend is applied downhole, reference is made to the fact that in a water based drilling system, as was discussed earlier, the drill string may at one point demonstrate rotation through the formation under increased torque or drag, and lubrication of the drill string is critical. Therefore, one would introduce a lubricant into the water base mud system, in order to lubricate the drill string. In the context of the invention, with the concentrate containing the preferred liquid hydrocarbon, a fully hydrogenated oligomer of 1-decene containing no more than 0.5% 1-decene monomer, the oligomer is preferably present at an optimum concentration range of between 70% and 95% with additives being present in an optimum range of 30% to 5%, the additives being more particularly chemical, oil, and water emulsifiers. The percentage of liquid would never be less than 5% of the blend with emulsifier. This liquid hydrocarbon - additive blend would then be added to the water base mud system, for example by introduction of the liquid hydrocarbon - additive blend into the mud pit, so that the blend would be in a concentration of at least .25% to 6.0% by volume in the water base drilling mud system. The drilling mud, in the system, during the introduction of the liquid hydrocarbon - additive blend, does not have to be interrupted, and the blend would then be mixed into the water base mud system and introduced downhole. Upon being introduced downhole, the liquid hydrocarbon blend would help to lubricate the surface between the wall of the drill pipe and the wall of the surrounding formation, so as to reduce the torque and drag on the drill string during downhole drilling.

Due to the fact that the liquid hydrocarbon, when a fully hydrogenated oligomer of 1-decene has a concentration of no more than .5% 1-decene monomer, the liquid hydrocarbon is non-toxic to marine life, and therefore, can be maintained in the mud system during drilling, and the drill cuttings do not have to be recovered and may be discharged. In the previous state of the art, if an oil based lubricant was introduced into the mud system, the entire mud system would have toxic levels above acceptable limits as per the LC₅₀ test and/or would produce a sheen on the water. In order to avoid the possibility of the spreading of the lubricant into the surrounding seawater, creating a hazard to marine life, the drilling fluid and cuttings would necessitate containment. The combination of matter in the present invention would overcome this likelihood and could be maintained in the water base mud system allowing normal discharge of drilling fluids and/or cuttings.

In its second application, the liquid hydrocarbon additive blend, would be utilized in the same concentration, with the same additives such as emulsifiers, downhole in order to unstick the drill string that has become stuck to the wall of the formation due to various factors including differential pressure downhole. In this particular application of the invention, the normal circulationof the water base mud system would be altered to allow for a certain volume of the liquid hydrocarbon additive blend to be introduced as a "pill" into the active mud system, which would therefore result in a greater combination of the liquid hydrocarbon/additive blend being applied at a predetermined point downhole. Following the introduction of the blend into the the borehole, the blend would then be displaced into the annulus in the borehole at the estimated level that the drill string has become stuck, and the blend would serve as a spotting fluid in order to, for example, replace the water in the mud causing the sticking of the pipe against the wall mud cake due to differential pressure, and would relieve that pressure and rotational torque in order to allow the drill string to resume rotational and vertical movement. Again, in view of the fact that the liquid hydrocarbon/additive blend is non-toxic to marine life, the pill could be maintained downhole and recirculated in the system, in which thereafter it would function as a lubricant, and not have to be isolated and removed from the active mud system. At the present time, if an oil-base lubricant mud is introduced downhole as a pill, the EPA may require that 50 barrels of mud preceeding and following the pill be retrieved together with the pill in order to avoid contamination of the mud system by a toxic substance such as the state-of-art oil base spotting fluids.

For purposes of clarification of the present invention applicant is submitting herewith the following test results attached to this application and incorporated herein by reference, which provide evidence of the usefulness and non-toxicity of the present invention.

### TEST 'A'

Test A attached hereto is a mixing chart of the liquid hydrocarbon/additive blend being used as a spotting fluid, and the composition by desired density of the spotting fluid.

### TEST 'B'

Test B was carried out to establish the toxicity level of the liquid hydrocarbon. Included is a summary of the results of this test providing bio-assay data on the drilling fluid containing 3% volume liquid hydrocarbon.

### TEST 'C'

Test C was designed to establish the toxicity level of generic, unweighted, laboratory prepared mud before and after the additions of Coastal Spot, liquid hydrocarbon based spotting liquid.

### Test A

When using the liquid hydrocarbon additive blend the following

procedure is followed: Mix in the following order while agitating:
1) Clean mixing pit to avoid unnecessary contamination
2) To Coastal Spot, add the water phase
3) Add salt (NaCl or CaCl₂) continue to agitate for 20-30 minutes
4) Add 10ppb lime and agitate well (10ppb all densities)
5) Add Barite and agitate to a smooth blend
6) Add SX-LUBE (25ppb all densities) and agitate to a smooth blend

Differing relative proportions of the various substances result in different densities in the resulting blend.

| COMPOSITION BY DESIRED DENSITY (Makes one 42 gallon (159 litre) barrel) | | | | | | |
|---|---|---|---|---|---|---|
| Density lb/gal (kg/l) | Spot gal (l) | Water gal (l) | Salt lb (kg) | | Barite lb (kg) | |
| | | | NaCl or | CaCl₂ | w/NaCl | or w/CaCl₂ |
| 8.0 (0.96) | 27.6 (104.6) | 11.8 (44.7) | 23.6 (10.7) | 28.4 (12.9) | 4.8 (2.2) | 0.0 (0.0) |
| 8.5 (1.02) | 27.5 (104.2) | 11.0 (41.7) | 22.0 (10.0) | 41.8 (19) | 34.8 (15.8) | 15.0 (6.8) |
| 9.0 (1.08) | 27.5 (104.2) | 10.5 (39.8) | 21.0 (9.5) | 39.9 (18.1) | 61.0 (27.7) | 42.1 (19.1) |
| 9.5 (1.14) | 27.2 (103.1) | 10.0 (37.9) | 20.0 (9.1) | 38.0 (17.3) | 89.1 (40.5) | 71.1 (32.3) |
| 10.0 (1.2) | 27.4 (103.8) | 9.1 (34.5) | 18.2 (8.3) | 34.6 (15.7) | 118.1 (53.7) | 101.7 (46.2) |
| 10.5 (1.26) | 27.2 (103.1) | 8.6 (32.6) | 17.2 (7.8) | 32.7 (14.9) | 145.6 (66.2) | 130.1 (59.1) |
| 11.0 (1.32) | 26.7 (101.2) | 8.4 (31.8) | 16.8 (7.6) | 31.9 (14.5) | 172.0 (78.2) | 156.9 (71.3) |
| 11.5 (1.38) | 26.5 (100.4) | 7.9 (29.9) | 15.8 (7.2) | 30.0 (13.6) | 199.5 (90.7) | 185.3 (84.7) |
| 12.0 (1.44) | 26.0 (98.5) | 7.7 (29.2) | 15.4 (7.0) | 29.3 (13.3) | 225.9 (102.7) | 212.1 (96.4) |
| 12.5 (1.5) | 25.8 (97.8) | 7.2 (27.3) | 14.4 (6.5) | 27.4 (12.5) | 253.4 (115.2) | 240.5 (109.3) |
| 13.0 (1.56) | 25.6 (97.0) | 6.8 (25.8) | 13.6 (6.2) | 25.8 (11.7) | 279.9 (127.2) | 267.6 (121.6) |
| 13.5 (1.62) | 25.3 (95.9) | 6.3 (23.9) | 12.6 (5.7) | 23.9 (10.9) | 308.1 (140.0) | 296.7 (134.9) |
| 14.0 (1.68) | 24.7 (93.6) | 6.2 (25.5) | 12.4 (5.6) | 23.6 (10.7) | 334.1 (151.9) | 322.9 (146.8) |
| 14.5 (1.74) | 24.6 (93.2) | 5.7 (21.6) | 11.4 (5.2) | 21.7 (9.9) | 360.9 (164.0) | 350.7 (159.4) |
| 15.0 (1.8) | 24.0 (91.0) | 5.7 (2.6) | 11.4 (5.2) | 21.7 (9.9) | 385.9 (175.4) | 375.7 (170.8) |
| 15.5 (1.86) | 24.0 (91.0) | 5.0 (19.0) | 10.0 (4.5) | 19.0 (8.6) | 414.2 (188.3) | 405.2 (184.2) |
| 16.0 (1.92) | 23.5 (89.1) | 4.8 (18.2) | 9.6 (4.4) | 18.2 (8.3) | 440.6 (200.3) | 431.9 (196.3) |
| 16.5 (1.98) | 23.2 (87.9) | 4.4 (16.7) | 8.8 (4.0) | 16.7 (7.6) | 467.7 (212.6) | 459.8 (209.0) |
| 17.0 (2.04) | 22.8 (86.4) | 4.0 (15.2) | 8.0 (3.6) | 15.2 (6.9) | 495.5 (225.3) | 488.3 (222.0) |
| 17.5 (2.1) | 22.6 (85.7) | 3.6 (13.6) | 7.2 (3.3) | 13.7 (6.2) | 522.0 (237.3) | 515.5 (234.3) |
| 18.0 (2.16) | 22.5 (85.3) | 3.0 (11.4) | 6.0 (2.7) | 11.4 (5.2) | 549.9 (250.0) | 544.5 (247.5) |

After Coastal Spot has freed the stuck pipe, simply leave Coastal Spot in the mud system to give enhanced lubricating characteristics and reduce the chance of sticking the pipe again.

### Test B

This evaluation was designed to establish the toxicity level of the liquid hydrocarbon (Coastal Solvent 300) which is the base component for Coastal Spot, CoastaLube. Due to the proprietary nature of these initial tests, the name Solvent 300 was given to the liquid hydrocarbon.

Coastal Solvent 300 is a high molecular weight fully hydrogenated alphaolefin oligomer, which has **no aromatics**, exhibits lubricity characteristics, and the bulk liquid is thermally stable to >600°F (316°C).

Solvent 300 performs very similarly to diesel and mineral oil in water based drilling fluid systems.

See Solvent 300 Acute Toxicity Test data for additional comparisons to highly refined mineral seal oil.

At a 3% by volume of liquid hydrocarbon in the drilling fluid, the results of the NPDES LC₅₀ 96HR Range Finder were:
Solvent 300 LC₅₀ 96HR RF 1,000,000

This test was conducted during product development phase.

The results of the approximate LC₅₀ test is much greater than the 30,000 ppm SPP specified in the NPDES permit.

### LC₅₀ APPROXIMATION BY 96 HOUR RANGE FINDER ON A DRILLING FLUID CONTAINING 3% BY VOLUME SOLVENT 300 FOR COASTAL CHEMICAL COMPANY

### INTRODUCTION

The purpose of this test was to provide approximate bioassay data for Coastal Chemical Company on a drilling fluid containing 3% by volume Solvent 300.

| BASE DRILLING FLUID FROM NL BAROID MATERIALS | |
|---|---|
| Prehydrated Aquagel | 20 lb/bbl (9.1kg/bbl) |
| Chrome Free Ligno (QB II) | 4 lb/bbl (1.9kg/bbl) |
| Simulated Drilling Solids Martin #5 Ball Clay | 20 lb/bbl (9.1kg/bbl) |
| Caustic Soda to pH | 9.5-10 |
| Drispac, reg. | 0.5 lb/bbl (0.23 kg/bbl) |
| Cellex, reg. | 0.5 lb/bbl (0.23 kg/bbl) |
| Soda Ash | 0.5 lb/bbl (0.23 kg/bbl) |
| Solvent 300 | 3 vol % |

Herein, it should be noted than one barrel (bbl) = 42 gals. (US) = 159 litres.

### SUMMARY

| APPROXIMATE LC₅₀ TOXICITY RESULTS | | | |
|---|---|---|---|
| Moving Average Method | Approximate 96 hr. LC₅₀ | 95% CONFIDENCE LEVEL | |
| | | LOWER | UPPER |
| DRILLING FLUID, ppm | | | |
| UNCORRECTED | > 1,000,000 | 0 | Infinity |
| CORRECTED FOR CONTROL MORTALITY | > 1,000,000 | - | - |
| REFERENCE TOXICANT, ppm | 15.6 | 14.5 | 16.9 |

| DRILLING FLUID SPP CONCENTRATION DATA | | |
|---|---|---|
| TEST CONCENTRATION | TOTAL NUMBER MYSIDS | |
| (ppm SPP) | EXPOSED | SURVIVED |
| CONTROL | 10 | 9 |
| 10,000 | 10 | 10 |
| 50,000 | 10 | 9 |
| 100,000 | 10 | 9 |
| 500,000 | 10 | 8 |
| 1,000,000 | 10 | 5 |

Complete test results and calculations may be found in the Experimental Details section.

### CONCLUSION

This drilling fluid containing 3% by volume Solvent 300 has an approximate LC₅₀ of about 100% SPP or much greater than the 3.0% minimum SPP specified in the NPDES permit.

This is only an approximate LC₅₀ obtained from a 96 hour range finder.

### EXPERIMENTAL DETAILS

The drilling fluid had a pH of 9.04 and did not emit a foul odor. Black spots were not present on the container walls. The sample was identified as follows:

### COASTAL CHEMICAL COMPANY BASE DRILLING FLUID CONTAINING 3% BY VOLUME SOLVENT 300

The drilling fluid was placed in cold storage upon arrival at 4°C in WTL's walk-in-cooler. The drilling fluid was prepared for biological testing according to EPA protocol. The drilling fluid was thoroughly homogenized for 30 minutes with a high shear mixer. The homogenized material was then combined with artificial seawater (salinity=20ppt) in a 1:9 ratio by volume.

The drilling fluid-seawater mixture, which was characterized by a pH of 8.15, was mixed for 5 minutes and allowed to settle for 1 hour. During the 5 minute mixing period, the pH was adjusted with 0.05 ml of 6N HCl to within ±0.2 units of the seawater (pH - 7.8). Following the settling period, the suspended particulate phase (SPP) was carefully decanted. Measurement of the pH, dissolved oxygen concentration, and temperature was made during a brief mixing period. The SPP had a pH of 8.02 and was adjusted with 0.05 ml of 6N HCl to a pH of 7.80, a dissolved oxygen concentration of 7.1 ppm a temperature of 20°C.

Mysids (Mysidopsis bahia) used as test organisms were 4-6 days old. The test animals were cultured in WTL's bioassay facilities using brood stock originally purchased from commercial suppliers. The test was conducted at 20°C ± 2°C using artificial seawater (Hawaiian Marine Mix) adjusted to a salinity of 20 parts per thousand (ppt) ± 2 ppt. Mysids were fed approximately 50 live Artemia (brine shrimp) nauplii per test animal every 96 hours. Tests were conducted with five concentrations of suspended particulate phase and a control (of seawater only) with 10 mysids randomly distributed among each concentration. Tests were performed in 1770 ml crystallizing dishes which contained 1 liter of test solution. Filtered artificial seawater with a salinity of 20 ppt was used to dilute the suspended particulate phase to test concentrations and as the control solution. A 14-hr light and 10-hr dark photo period was maintained with cool-white fluorescent lights.

Air was supplied to the test chambers by a commercial aquaculture blower and delivered through glass tubing at a rate of between 50 and 140 cubic centimeters per minute. At a minimum, the number of survivors were determined at 0 and 96 hours. Temperature, salinity, dissolved oxygen, and pH were measured daily.

The 96 hour reference toxicant test, Sodium Lauryl Sulfate (SLS), for this bioassay was performed according to EPA protocol. The SLS used was obtained from Fisher Scientific and was from their Lot #853661. The LC₅₀ obtained with this most recent SLS reference test was 15.6 ppm SLS with 95% CI of 14.5 ppm to 16.9 ppm. Up to this point the mean LC₅₀ for SLS reference toxicant tests run at this lab has been 15.1 with a Standard deviation of 2.7. The LC₅₀ of this 96 hour reference toxicant test is within two standard deviations of the mean and therefore can be considered acceptable.

### DATA AND RESULTS

Data generated by the 96 hour Range Finder test with mysids are presented in Appendix B. Greater than 90 percent survival occurred in the control exposure. Survival data and a copy of the computer print out for the LC₅₀ calculation are included in Appendix A.

The 96 hour approximate LC₅₀ for this sample of drilling fluid was greater than 1,000,000 ppm suspended particulate phase (SPP). The 95 percent confidence limits for this approximate LC₅₀ value 0 - infinity ppm (SPP).

**TABLE 1**

| Survival data from 96 hr. Range Finder test with mysids (Mysidopsis bahia) and drilling fluid. | | | | | | | |
|---|---|---|---|---|---|---|---|
| CONCENTRATION OF PHASE, PPM | % SURVIVAL | REPLICATE | 0 HR | 24 HR | 48 HR | 72 HR | 96 HR |
| 0 (Control) | 90 | A | 10 | 10 | 10 | 9 | 9 |
| 10,000 | 100 | A | 10 | a | a | a | 10 |
| 50,000 | 90 | A | 10 | a | a | a | 9 |
| 100,000 | 90 | A | 10 | a | a | a | 9 |
| 500,000 | 80 | A | 10 | a | a | a | 8 |
| 1,000,000 | 50 | A | 10 | a | a | a | 5 |

| | | | | | | | |
|---|---|---|---|---|---|---|---|
| ^{a} Visual observation for determining the number of survivors could not be made without disturbing the mysids. | | | | | | | |

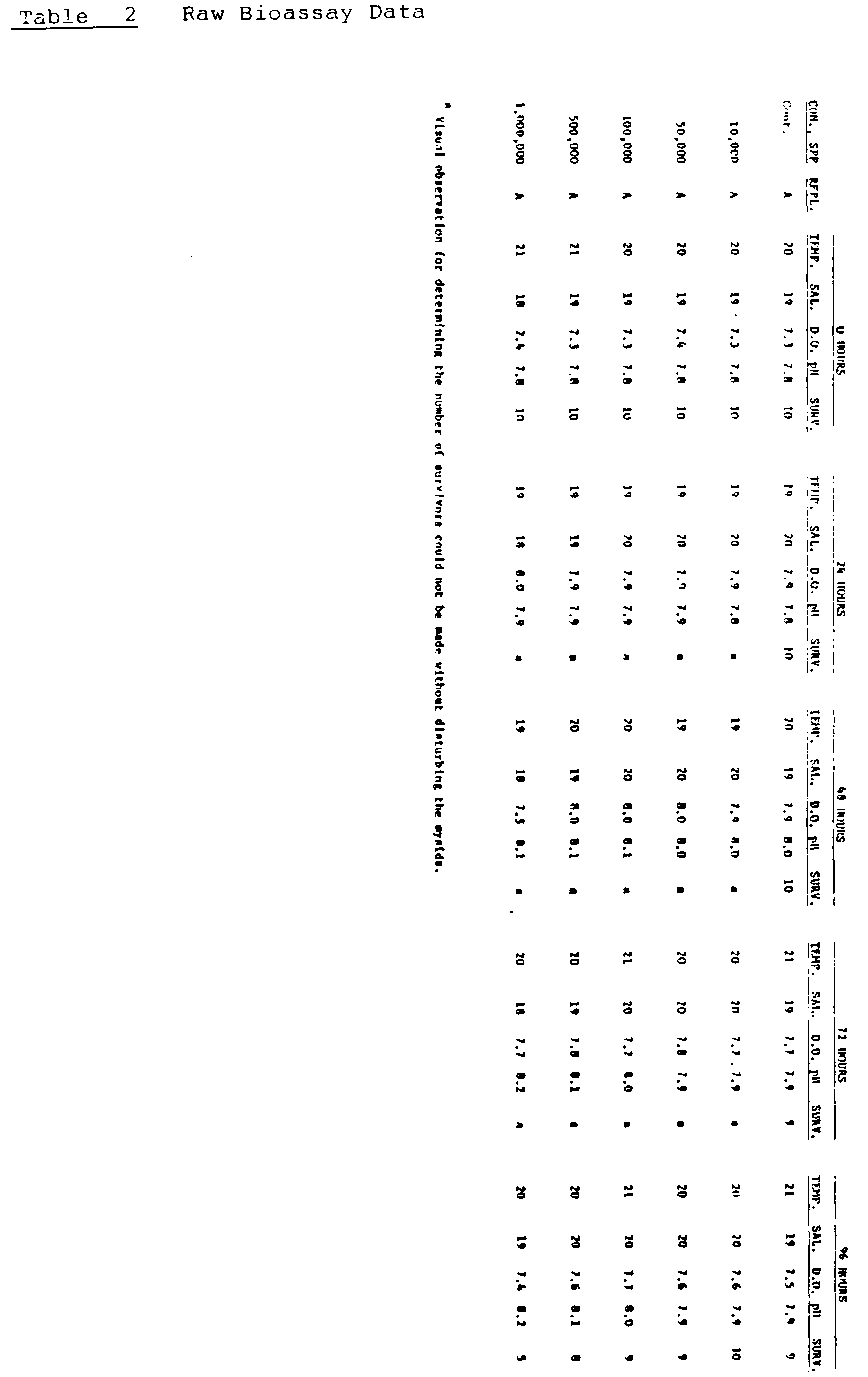

### Test C

This evaluation was designed to establish the toxicity level of a generic, unweighted, laboratory prepared mud and then again determine the approximate toxicity levels of the fluid with the addition of 10% concentration of Coastal Spot based spotting fluid.

This test condition would simulate a 2,000BBL mud system with a 250BBL spot added. This is believed to be above practical applications, but will cover worse possible case situation, or multiple spot application within the same system.

At a 10% by volume of Coastal Spot in the drilling fluid, the results of the NPDES LC₅₀ 96HR Range Finder were:

| | |
|---|---|
| Mud evaluation LC₅₀ 96HR RF | 1,000,000 |
| Mud evaluation with 10% Coastal Spot LC₅₀ 96HR RF | 109,995 |

The above test was conducted during product development.

The results of the approximate LC₅₀ test is much greater than the 30,000ppm SPP as specified in the NPDES permit.

### APPROXIMATED LC₅₀ OF A BASE MUD CONTAINING 10% OF SAMPLE #3 SPOTTING FLUID FOR COASTAL CHEMICAL

| | |
|---|---|
| on 8/29/97-9/2/87. | |

| BASE MUD PREPARED FROM NL BAROID MATERIALS. | |
|---|---|
| Prehydrated Aquagel | 20 lb/bbl (9.1 kg/bbl) |
| Chrome Free Ligno (QB II) | 4 lb/bbl (1.9 kg/bbl) |
| Simulated Drilled Solids Martin #5 Ball Clay | 20 lb/bbl (9.1 kg/bbl) |
| Caustic Soda to pH | 9.5-10 |
| Drispac, reg. | 0.5 lb/bbl (0.23 kg/bbl) |
| Cellex, reg. | 0.5 lb/bbl (0.23 kg/bbl) |
| Soda Ash | 0.5 lb/bbl (0.23 kg/bbl) |
| Sample #3 (Spotting Fluid) | 10 vol % |

### SUMMARY

| LC₅₀ TOXICITY RESULTS | | | |
|---|---|---|---|
| Moving Average Method | 96 hr. LC₅₀ | 95% CONFIDENCE LEVEL | |
| | | LOWER | UPPER |
| DRILLING FLUID, ppm | | | |
| UNCORRECTED (Sample #3) | 109,995 | 66,024 | 179,782 |
| UNCORRECTED (Base Mud) | 1,000,000 | - | - |
| | | | |

| CORRECTED FOR CONTROL MORTALITY | | | |
|---|---|---|---|
| (Sample #3) | 109,995 | 66,024 | 179,782 |
| (Base Mud) | 1,000,000 | - | - |
| | | | |
| REFERENCE TOXICANT, ppm | 16.1 | 14.8 | 17.7 |

| DRILLING FLUID SPP CONCENTRATION DATA | | | | |
|---|---|---|---|---|
| | SAMPLE #3 | | BASE MUD | |
| TEST CONCENTRATION, | TOTAL NUMBER MYSIDS | | TOTAL NUMBER MYSIDS | |
| (ppm SPP) | EXPOSED | SURVIVED | EXPOSED | SURVIVED |
| CONTROL | 10 | 10 | 11 | 11 |
| 10,000 | 10 | 9 | 10 | 10 |
| 50,000 | 10 | 10 | 10 | 10 |
| 100,000 | 10 | 6 | 10 | 8 |
| 500,000 | 10 | 0 | 10 | 10 |
| 1,000,000 | 10 | 0 | 10 | 10 |

| | SAMPLE #3 | | BASE MUD | |
|---|---|---|---|---|
| TOTAL SUSPENDED SOLIDS, mg/l | 11,795 | | 30,359 | |
| TOTAL DISSOLVED SOLIDS, mg/l | 12,625 | | 29,575 | |

Complete test results and calculations may be found in the Experimental Details section.

### CONCLUSION

Sample #3 in a concentration of 10% by volume has an approximate LC₅₀ of about 11% SPP or much greater than the 3.0% minimum SPP specified in the NPDES permit.

This is only an approximate LC₅₀ obtained from a 96 hour range finder.

### EXPERIMENTAL DETAILS

The drilling fluid had a pH of 10.4 and did not emit a foul odor. Black spots were not present on the container walls. The sample was identified as follows:

### SAMPLE #3

### COASTAL CHEMICAL COMPANY

The drilling fluid was placed in cold storage upon arrival at 4°C in WTL's walk-in-cooler. The drilling fluid was prepared for biological testing according to EPA protocol. The drilling fluid was thoroughly homogenized for 30 minutes with a high shear mixer. The homogenized material was then combined with artificial seawater (salinity=20ppt) in a 1:9 ratio by volume.

### SAMPLE #3

The drilling fluid-seawater mixture, which was characterized by a pH of 9.24, was mixed for 5 minutes and allowed to settle for 1 hour. During the 5 minute mixing period, the pH was adjusted with 1.0 ml of 6N HCl and 0.05 ml 10N NaOH to within ±0.2 units of the seawater (pH - 7.8). Following the settling period, the suspended particulate phase (SPP) was carefully decanted. Measurement of the pH, dissolved oxygen concentration, and temperature was made during a brief mixing period. The SPP had a pH of 7.79, a dissolved oxygen concentration of 6.6 ppm, a temperature of 20°C, Total Suspended Solids of 11,795 mg/l and Total Dissolved Solids of 30,359 mg/l.

### BASE MUD

The drilling fluid-seawater mixture, which was characterized by a pH of 8.99, was mixed for 5 minutes and allowed to settle for 1 hour. During the 5 minute mixing period, the pH was adjusted with 0.6 ml of 6N HCl and 0.05 ml 10N NaOH to within ±0.2 units of the seawater (pH - 7.8). Following the settling period, the suspended particulate phase (SPP) was carefully decanted. Measurement of the pH, dissolved oxygen concentration, and temperature was made during a brief mixing period. The SPP had a pH of 8.01 and was adjusted with 0.1 ml 6N HCl to a pH of 7.87, a dissolved oxygen concentration of 6.8 ppm, a temperature of 20°C, Total Suspended Solids of 12,625 mg/l and Total Dissolved Solids of 29,574 mg/l.

Mysids (Mysidopsis bahia) used as test organisms were 4-6 days old. The test animals were cultured in WTL's bioassay facilities using brood stock originally purchased from commercial suppliers. The test was conducted at 20°C ± 2°C using artificial seawater adjusted to a salinity of 20 parts per thousand (ppt) ± 2 ppt. Mysids were fed ±50 live Artemia (brine shrimp) nauplii per test animal every 24 hours. Tests were conducted with five concentrations of suspended particulate phase and a control (of seawater only) with 60 mysids randomly distributed among three replicates of each concentration. Tests were performed in 1770 ml crystallizing dishes which contained 1 liter of test solution. Filtered artificial seawater with a salinity of 20 ppt was used to dilute the suspended particulate phase to test concentrations and as the control solution.

A 14-hr light and 10-hr dark photo period was maintained with cool-white fluorescent lights. Air was supplied to the test chambers by commercial aquarium air pumps and delivered through glass tubing at a rate of between 50 and 140 cubic centimeters per minute. At a minimum, the number of survivors were determined at 0 and 96 hours. Temperature, salinity, dissolved oxygen, and pH were measured daily.

The reference toxicant test, Sodium Lauryl Sulfate (SLS), for this bioassay was performed according to EPA protocol. The SLS used was obtained from Fisher Scientific and was from their Lot #853661. The LC₅₀ obtained with this most recent SLS reference test was 16.1 ppm SLS with 95% CI of 14.8 ppm to 17.7 ppm. Up to this point the mean LC₅₀ for SLS reference toxicant tests run at this lab has been 15.2 with a Standard deviation of 3.1. The LC₅₀ of this reference toxicant test is within two standard deviations of the mean and therefore can be considered acceptable.

### DATA AND RESULTS

Data generated by the acute toxicity test with mysids are presented in Appendix B. Greater than 90 percent survival occurred in the control exposure. Survival data and a copy of the computer print out for the LC₅₀ calculation are included in Appendix A.

The approximate LC₅₀ for Sample #3 was 109,995 ppm suspended particulate phase (SPP). The approximate LC₅₀ for the Base Mud was >1,000,000 ppm suspended particulate phase (SPP). The 95 percent confidence limits for Sample #3 LC₅₀ value were 66,024 - 179,782 ppm (SPP) and values for the Base Mud could not be calculated.

### Appendix A

| SAMPLE #3 | | |
|---|---|---|
| 96 HOUR RANGE FINDER DATA | | |
| TEST CONCENTRATION | TOTAL NUMBER MYSIDS | |
| (PPM SPP) | EXPOSED | SURVIVED |
| Control | 10 | 10 |
| 10,000 | 10 | 9 |
| 50,000 | 10 | 10 |
| 100,000 | 10 | 6 |
| 500,000 | 10 | 0 |
| 1,000,000 | 10 | 0 |
| APPROXIMATE 96 HR. LC₅₀, ppm 109,995 | | |

| BASE MUD | | |
|---|---|---|
| 96 HOUR RANGE FINDER DATA | | |
| TEST CONCENTRATION | TOTAL NUMBER MYSIDS | |
| (PPM SPP) | EXPOSED | SURVIVED |
| Control | 11 | 11 |
| 10,000 | 10 | 10 |
| 50,000 | 10 | 10 |
| 100,000 | 10 | 8 |
| 500,000 | 10 | 10 |
| 1,000,000 | 10 | 10 |
| APPROXIMATE 96 HR. LC₅₀, ppm 1,000,000 | | |

**TABLE 1:**

| Survival data from toxicity test with mysids (Mysidopsis bahia) and drilling fluid. | | | | | | | |
|---|---|---|---|---|---|---|---|
| SAMPLE #3 | | | | | | | |
| CONCENTRATIOIN OF PHASE, PPM | % SURVIVAL | REPLICATE | 0 HR | 24 HR | 48 HR | 72 HR | 96 HR |
| 0 (Control) | 100 | A | 10 | 10 | 10 | 10 | 10 |
| 10,000 | 90 | A | 10 | a | a | a | 9 |
| 50,000 | 100 | A | 10 | a | a | a | 10 |
| 100,000 | 60 | A | 10 | a | a | a | 6 |
| 500,000 | 0 | A | 10 | a | a | a | 0 |
| 1,000,000 | 0 | A | 10 | a | a | a | 0 |

| BASE MUD | | | | | | | |
|---|---|---|---|---|---|---|---|
| CONCENTRATION OF PHASE, PPM | % SURVIVAL | REPLICATE | 0 HR | 24 HR | 48 HR | 72 HR | 96 HR |
| 0 (Control) | 100 | A | 11 | 11 | 11 | 11 | 11 |
| 10,000 | 100 | A | 10 | a | a | a | 10 |
| 50,000 | 80 | A | 10 | a | a | a | 10 |
| 100,000 | 100 | A | 10 | a | a | a | 8 |
| 500,000 | 100 | A | 10 | a | a | a | 10 |
| 1,000,000 | 100 | A | 10 | a | a | a | 10 |

| | | | | | | | |
|---|---|---|---|---|---|---|---|
| ^{a} Visual observation for determining the number of survivors could not be made without disturbing the mysids. | | | | | | | |

| 95 HOUR LC50̸ CALCULATIONS FOR M. BAHIA AFTER EXPOSURE TO COASTAL 584 70̸ | | | | |
|---|---|---|---|---|
| CONC. % SPP | NUMBER EXPOSED | NUMBER DEAD | PERCENT DEAD | BINOMIAL PROB. (PERCENT) |
| 10̸0̸.0̸0̸0̸ | 10̸ | 0̸ | 0̸.0̸0̸ | 0̸.0̸977 |
| 50̸.0̸0̸0̸ | 10̸ | 0̸ | 0̸.0̸0̸ | 0̸.0̸977 |
| 10̸.0̸0̸0̸ | 10̸ | 2 | 20̸.0̸0̸ | 5.4688 |
| 5.0̸0̸0̸ | 10̸ | 0̸ | 0̸.0̸0̸ | 0̸.0̸977 |
| 1.0̸0̸0̸ | 10̸ | 0̸ | 0̸.0̸0̸ | 0̸.0̸977 |
| At a confidence level of 95 percent the binomial test cannot give any useful information. | | | | |
| The usefulness of any LC50̸ calculated from this set of data is questionable because a concentration-effect relationship has not been demonstrated over a reasonable range (E.S. 37 to >63) of percent dead. | | | | |
| Neither the approximate LC50̸ calculation nor the moving average method can be used with this set of DATA. Either the highest concentration killed less than 50̸ percent or the lowest killed more than 50̸. If the probit slope is negative, enter the data again using number alive instead of number dead. | | | | |
| When there are less than two different concentrations at which the percent dead is between 0̸ and 10̸0̸, the probit method cannot give any statistically sound results. | | | | |
| Compare results with original data to see if they are reasonable. | | | | |

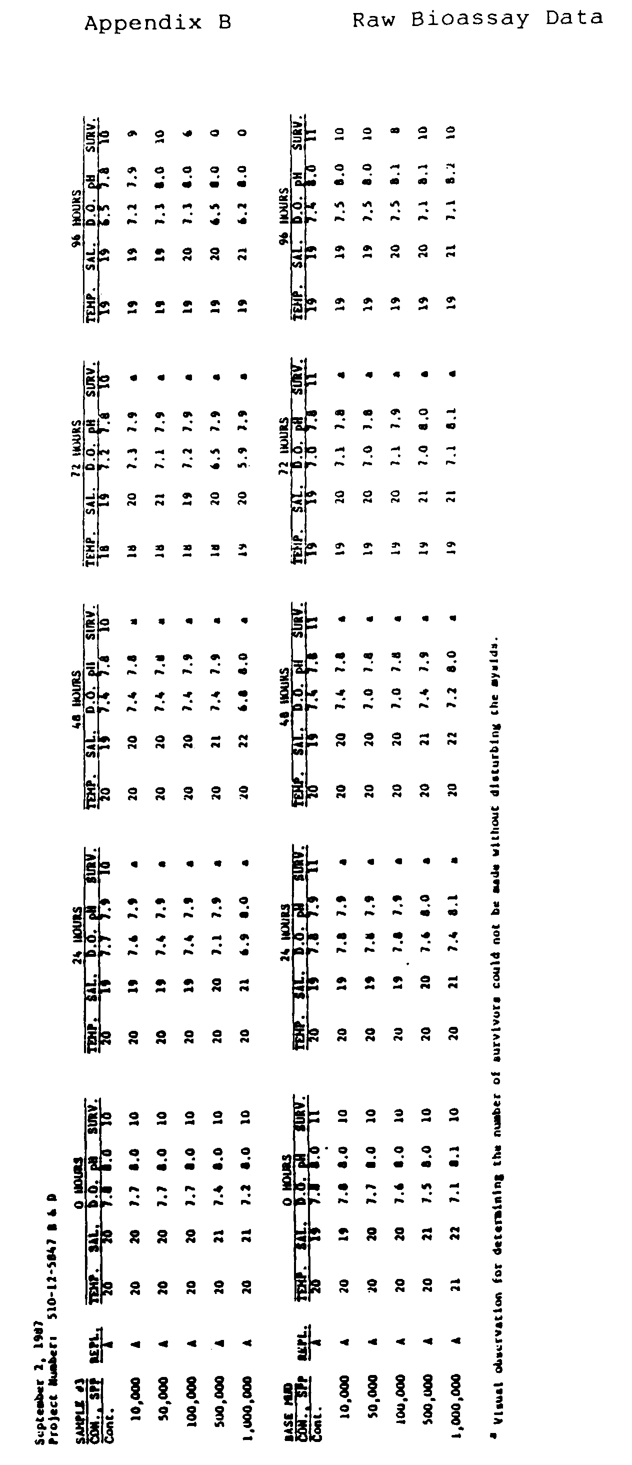

## Claims

1. A drilling fluid comprising:
i) a water base mud system to which there has been added and mixed therewith
ii) a drilling fluid concentrate in a liquid volume concentration of 0.25 to 6.0% of the water base mud system, which concentrate comprises:
a) a liquid hydrocarbon of acceptably low toxicity to marine life according to the NPDES-GOM-LC₅₀ test and which is a totally hydrogenated oligomer of an alphaolefin, at a concentration of at least 5% of the drilling fluid concentrate; and
b) an emulsifier additive added to the liquid hydrocarbon, to be present in the concentrate in a range of 30% to 5% concentration.

2. A drilling fluid as claimed in Claim 1, wherein the percentage of said liquid hydrocarbon in said concentrate is 90%.

3. A drilling fluid as claimed in Claim 1 or 2, wherein the percentage of said emulsifier additive in said concentrate is 10%.

4. A drilling fluid as claimed in any preceding claim, wherein the alphaolefin oligomer is a 1-decene oligomer which contains no more than 0.5% of 1-decene monomer.

5. A drilling fluid as claimed in any one of claims 1 to 4, wherein the emulsifier additive is constituted by a modified fatty acid/amide blend.

6. A drilling fluid as claimed in any one of claims 1 to 4, wherein the emulsifier is constituted by a sulfurized fatty acid/modified fatty acid blend.

7. A drilling method in downhole drilling, utilizing a water-base mud system, wherein a pipe is stuck over an interval thereof and a predetermined volume of a drilling fluid concentrate is introduced downhole as a spotting fluid at the depth at which sticking of a pipe has occurred to displace the water-based mud over the entire stuck interval to unstick the pipe, which drilling fluid concentrate comprises (a) a liquid hydrocarbon of acceptably low toxicity to marine life according to the NPDES-GOM-LC₅₀ test and which is a totally hydrogenated oligomer of an alphaolefin, at a concentrate of at least 5% of the drilling fluid concentrate and (b) an emulsifier additive added to the liquid hydrocarbon, to be present in the concentrate in a range of 30% to 5% of the concentrate, and continuing drilling with the concentrate admixed with the water-based mud system.

8. A method as claimed in claim 7, wherein the emulsifier additive is a blend of modified fatty acid/amide blend.

9. A method as claimed in claim 7 or 8, wherein the percentage of said emulsifier additive in said concentrate is 10%.

10. A method as claimed in any one of claims 6 to 8, wherein the percentage of said liquid hydrocarbon in said concentrate is 90%.

11. A method as claimed in any one of claims 7 to 10, wherein the alphaolefin oligomer is a 1-decene oligomer which contains no more than 0.5% of 1-decene monomer.

12. A method as claimed in any one of claims 7 to 11, wherein a drilling fluid as claimed in any one of claims 1 to 5 is being utilized in the downhole drilling and said drilling fluid concentrate is introduced into the drilling fluid as a "pill" separated from the mud of the water base mud system.

13. A drilling method in downhole drilling, characterized in that a water base mud system is utilized having a drilling fluid concentrate as set out in any one of claims 1 to 6 present as a permanent addition thereto to act as lubricant.

## Patentansprüche

1. Bohrspülung, umfassend:
i) ein Schlammsystem auf Wasserbasis, zu dem gegeben wird und das gemischt wird mit
ii) ein(em) Bohrspülungskonzentrat in einer Konzentration von 0,25 bis 6,0 % des Flüssigkeitsvolumens des Schlammsystems auf Wasserbasis, wobei das Konzentrat umfaßt:
a) einen flüssigen Kohlenwasserstoff, der gemäß NPDES-GOM-LC₅₀-Test für marine Lebewesen zufriedenstellend niedertoxisch ist und ein vollständig hydriertes Oligomer eines alpha-Olefins ist, in einer Konzentration von mindestens 5% des Bohrspülungskonzentrates; und
b) ein zu dem flüssigen Kohlenwasserstoff zugegebenes Emulgatoradditiv, das in dem Konzentrat in einer Konzentration von 30% bis 5% vorliegt.

2. Bohrspülung nach Anspruch 1, bei der der Prozentsatz des flüssigen Kohlenwasserstoffs in dem Konzentrat 90% beträgt.

3. Bohrspülung nach Anspruch 1 oder 2, bei der der Prozentsatz des Emulgatoraddititvs in dem Konzentrat 10% beträgt.

4. Bohrspülung nach einem vorhergehenden Anspruch, bei der das alpha-Olefin-Oligomer ein 1-Decen-Oligomer ist, das nicht mehr als 0,5% 1-Decen-Monomer enthält.

5. Bohrspülung nach einem der Ansprüche 1 bis 4, wobei das Emulgatoraddititv aus einem modifizierte Fettsäure/Amid-Gemisch besteht.

6. Bohrspülung nach einem der Ansprüche 1 bis 4, wobei das Emulgatoraddititv aus einem geschwefelte Fettsäure/modifizierte Fettsäure-Gemisch besteht.

7. Bohrverfahren bei Tiefbohrungen unter Verwendung eines Schlammsystems auf Wasserbasis, wobei ein Abschnitt eines Rohrs festsitzt und ein vorgegebenes Volumen eines Bohrspülungskonzentrates in das Bohrloch als Spotting-Flüssigkeit in die Tiefe gegeben wird, in der das Rohr festsitzt, um den Schlamm auf Wasserbasis an dem gesamten festsitzenden Abschnitt zu entfernen und das Rohr loszulösen, wobei das Bohrspülungskonzentrat umfaßt:
(a) einen flüssigen Kohlenwasserstoff, der gemäß NPDES-GOM-LC₅₀-Test für marine Lebewesen zufriedenstellend niedertoxisch ist und ein vollständig hydriertes Oligomer eines alpha-Olefins ist, in einer Konzentration von mindestens 5% des Bohrspülungskonzentrates; und
b) ein zu dem flüssigen Kohlenwasserstoff zugegebenes Emulgatoradditiv, das in dem Konzentrat zu 30% bis 5% vorliegt,
und Fortführen des Bohrens mit dem Konzentrat, das mit dem Schlammsystem auf Wasserbasis gemischt ist.

8. Verfahren nach Anspruch 7, wobei das Emulgatoraddititv ein modifizierte Fettsäure/Amid-Gemisch ist.

9. Verfahren nach Anspruch 7 oder 8, wobei der Prozentsatz des Emulgatoraddititvs in dem Konzentrat 10% beträgt.

10. Verfahren nach einem der Ansprüche 6 bis 8, wobei der Prozentsatz an flüssigem Kohlenwasserstoff in dem Konzentrat 90% beträgt.

11. Verfahren nach einem der Ansprüche 7 bis 10, wobei das alpha-Olefin-Oligomer ein 1-Decen-Oligomer ist, das nicht mehr als 0,5% 1-Decen-Monomer enthält.

12. Verfahren nach einem der Ansprüche 7 bis 11, wobei eine Bohrspülung nach einem der Ansprüche 1 bis 5 bei der Tiefbohrung verwendet wird und das Bohrspülungskonzentrat in die Bohrspülung als "Pille" von dem Schlamm des Schlammsystems auf Wasserbasis gesondert eingebracht wird.

13. Bohrverfahren bei der Tiefbohrung, dadurch gekennzeichnet, daß ein Schlammsystem auf Wasserbasis verwendet wird mit einem Bohrspülungskonzentrat nach einem der Ansprüche 1 bis 6, das ständig darin vorhanden ist und als Gleitmittel wirkt.

## Revendications

1. Fluide de forage comprenant :
i) un système de boue à base d'eau auquel on a ajouté et mélangé
ii) un concentré de fluide de forage en une concentration volumique de liquide comprise entre 0,25 et 6,0 % par rapport au système de boue à base d'eau, lequel concentré comprend :
a) un hydrocarbure liquide ayant une toxicité, selon l'essai NPDES-GOM-LC₅₀, assez faible pour être acceptable pour la vie marine, et qui est un oligomère complètement hydrogéné d'une α-oléfine, à une concentration d'au moins 5 % par rapport au concentré de fluide de forage,
b) un additif émulsifiant ajouté à l'hydrocarbure liquide, de manière à ce qu'il soit présent dans le concentré à raison de 30 % à 5 %.

2. Fluide de forage conforme à la revendication 1, dans lequel le pourcentage dudit hydrocarbure liquide dans ledit concentré est de 90 %.

3. Fluide de forage conforme à la revendication 1 ou 2, où le pourcentage dudit additif émulsifiant dans ledit concentré est égal à 10 %.

4. Fluide de forage conforme à l'une quelconque des revendications précédentes, dans lequel l'oligomère d'α-oléfine est un oligomère de 1-décène contenant au plus 0,5 % de 1-décène monomère.

5. Fluide de forage conforme à l'une quelconque des revendications 1 à 4 dans lequel l'additif émulsifiant est constitué d'un mélange acide gras/amide gras modifié.

6. Fluide de forage conforme à l'une quelconque des revendications 1 à 4, dans lequel l'additif émulsifiant est constitué d'un mélange acide gras sulfuré/acide gras modifié.

7. Procédé de forage pour le forage de fond, utilisant un système de boue à base d'eau, dans lequel une tige est introduite dans un intervalle et un volume prédéterminé d'un concentré de fluide de forage est introduit au fond sous forme d'un fluide "dégrippant" (*spotting fluid*) à la profondeur ou la tige est coincée afin de remplacer la boue à base d'eau sur l'intervalle de grippage entier afin de décoincer la tige, lequel concentré de fluide de forage comprend (a) un hydrocarbure liquide ayant une toxicité, selon l'essai NPDES-GOM-LC₅₀, assez faible pour être acceptable pour la vie marine, et qui est un oligomère complètement hydrogéné d'une α-oléfine, à une concentration d'au moins 5 % du concentré de fluide de forage, et (b) un additif émulsifiant ajouté à l'hydrocarbure liquide, de manière à ce qu'il soit présent dans le concentré à raison de 30 % à 5 %, et à poursuivre le forage avec le concentré mélangé au système de boue à base d'eau.

8. Procédé conforme à la revendication 7 dans lequel l'additif émulsifiant est un mélange amide/acide gras modifié.

9. Procédé conforme à la revendication 7 ou 8, dans lequel le pourcentage dudit additif émulsifiant dans ledit concentré est de 10 %.

10. Procédé conforme à l'une quelconque des revendications 6 à 8, dans lequel le pourcentage dudit hydrocarbure liquide dans ledit concentré est de 90 %.

11. Procédé conforme à l'une quelconque des revendications 7 à 10, dans lequel l'oligomère d'α-oléfine est un oligomère de 1-décène qui contient au plus 0,5 % de 1-décène monomère.

12. Procédé conforme à l'une quelconque des revendications 7 à 1 1 dans lequel un fluide de forage conforme à l'une quelconque des revendications 1 à 5 est utilisé dans le forage de fond et ledit concentré de fluide de forage est introduit dans le fluide de forage sous forme d'une "pilule" séparée de la boue du système de boue à base d'eau.

13. Procédé de forage pour le forage de fond, caractérisé en ce que l'on utilise un système de boue à base d'eau comportant un concentré de fluide de forage défini dans une quelconque des revendications 1 à 6, présent sous forme d'additif permanent destiné à agir en tant que lubrifiant.
